# EUROPEAN PATENT APPLICATION

(11) **EP 1 638 324 A1**
(43) Date of publication of application: **22.03.2006**
(21) Application number: 05255189.2
(22) Date of filing: 24.08.2005
(51) Int. Cl.: H04N 5/76

(54) **Reproducing apparatus and reproducing method**

(30) Priority: 27.08.2004 JP 2004247784
(71) Applicant: SONY CORPORATION, Tokyo 141-0001 (JP)
(72) Inventor: Ohashi, Hisashi, Shinagawa-ku Tokyo (JP); Sakai, Kuniaki, Shinagawa-ku Tokyo (JP); Sasaki, Isao, Shinagawa-ku Tokyo (JP)
(74) Representative: Nicholls, Michael John

(57) **Abstract**

A reproducing apparatus is disclosed that is capable of reproducing digital signals that have a plurality of different formats from recording medium, the apparatus includes a format determination section, a reproduction section, and a state change management section. The format determination section determines the format of a digital signal reproduced from the recording medium. The reproduction section reproduces a digital signal from the recording medium in a predetermined state. The state change management section manages the change of the state of the reproduction section according to the determined result of the format determination section.

## Description

The present invention relates to a reproducing apparatus and a reproducing method that reproduce digital video signals from a recording medium on which the digital video signals have been recorded in a plurality of different formats.

Recently, a recording apparatus that records video data in a plurality of formats that differ in the numbers of encode/decode units on one recording medium such as a magnetic tape and a reproducing apparatus that reproduces video data that have a plurality of formats that differ in the number of decode units have been proposed. The following patent document 1 describes a digital recording video camera that has a plurality of selectable compression/decompression circuits that correspond to different formats so that video data of a plurality of formats can be recorded and reproduced to and from one recording medium. [Patent Document 1] Japanese Patent Laid-Open Publication No. 10-174032

Now, it is assumed that video data encoded according to the Moving Pictures Experts Group 2 (MPEG2) system and video data encoded according to the DV system are mixedly recorded on one magnetic tape.

As well known, according to the MPEG2 system, with intra-frame compression encoding that uses Discrete Cosine Transform (DCT) and inter-frame compression encoding that uses chronological prediction encoding, video data are compression-encoded. In the MPEG2 system, bidirectional (B) pictures, predictive (P) pictures that are chronologically and predictively encoded and intra (I) pictures that are completed with themselves are defined. A group that contains at least one I picture and that is completed is referred to as a Group Of Picture (GOP-). One GOP is the minimum independently accessible unit of an MPEG stream.

In this example, one GOP is composed of 15 frames that are one I picture, a plurality of P pictures, and a plurality of B pictures. One GOP corresponds to 0.5 seconds of a reproduction time. On the other hand, according to the DV system, since the inter-frame compression-encoding is not performed for video data, they can be accessed in frames.

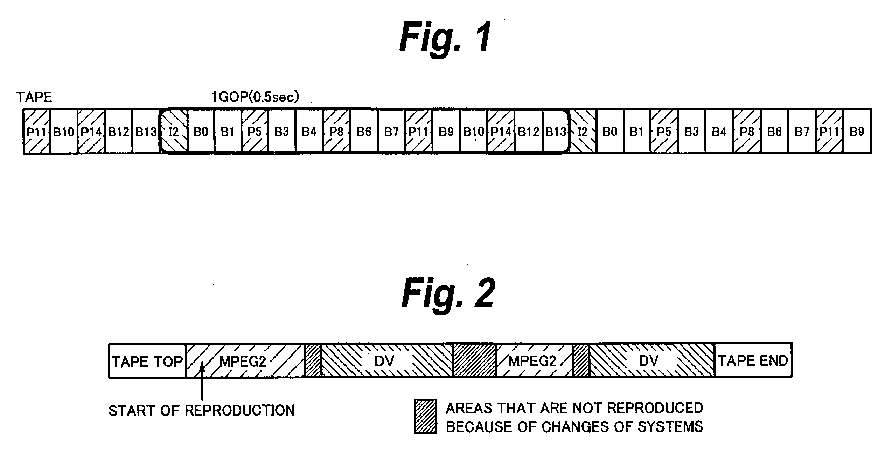

Fig. 1 shows an example of a recording order of frames on a recording medium such as a magnetic tape in the case that one GOP is composed of 15 frames according to the MPEG2 system. Pictures are output in the order of suffix numbers added to "I", "P", and "B" shown in Fig. 1. Thus, a P picture and a B picture are preceded by other pictures that are used to predict the P picture and the B picture themselves in the recording order. In other words, since B pictures B0 and B1 that are the first and second B pictures in the recording order are predicted with P picture P14 of the preceding GOP and I picture 12 of the current GOP, the B pictures B0 and B1 are preceded by the picture I2 in the recording order. Likewise, since B pictures B3 and B4 that are the fourth and fifth B pictures in the reproducing order are predicted with I picture I2 and P picture P5, B pictures B3 and B4 are preceded by I picture I2 and P picture P5 in the recording order.

Thus, according to the MPEG2 system, since a B picture is output with other pictures that are followed and preceded by the B picture in the output order, when video data are reproduced, it is necessary to pre-read data for several frames from a magnetic tape and store them in a memory. In contrast, according to the DV system, since the inter-frame compression-encoding is not performed, it is not necessary to perform such a pre-read process.

Thus, the frame operation mode according to the DV system is mechanically different from the GOP operation mode according to the MPEG2 system. For example, according to the DV system, video data are accessed in frames. According to the MPEG2 system, the beginning of a GOP is detected and several early frames are traced back.

According to the DV system, the screen size is 720 pixels x 480 lines fixed. According to the MPEG2 system, high resolution video data can be recorded and also a picture size can be selected from a plurality of picture sizes, for 60 Hz systems, "1280 pixels x 720 lines, 30 frames/second, aspect ratio 16 : 9", "720 pixels x 480 lines, 60 frames/second, aspect ratio 16 : 9", "720 pixels x 480 lines, 60 frames/second, aspect ratio 4 : 3", and so forth and for 50 Hz systems "720 pixels x 576 lines, 50 frames/second, aspect ratio 16 : 9", "720 pixels x 576 lines, 25 frames/second, aspect ratio 4 : 3", and so forth. In this case, the signal process system operates differently in the DV system and the MPEG2 system.

Thus, when video data are reproduced from a video tape on which video data according to the DV system and video data according to the MPEG2 system have been mixedly recorded, it takes a time to change video data according to the DV system to video data according to the MPEG2 system or vice versa. As shown in Fig. 2, there will be periods in which video data are not reproduced. When one system in which video data are being reproduced is changed to another system corresponding to a recording format of a magnetic tape, namely, when the MPEG2 system is changed to the DV system, a non-reproducible period of several frames takes place. Likewise, when the DV system is changed to the MPEG2 system, a non-reproducible period of several seconds takes place.

In addition, even if the user does not intentionally change the MPEG2 system to the DV system or vice versa, these non-reproducible periods take place when video data according to the MPEG2 system are overwritten on a tape on which video data according to the DV2 system have been fully recorded.

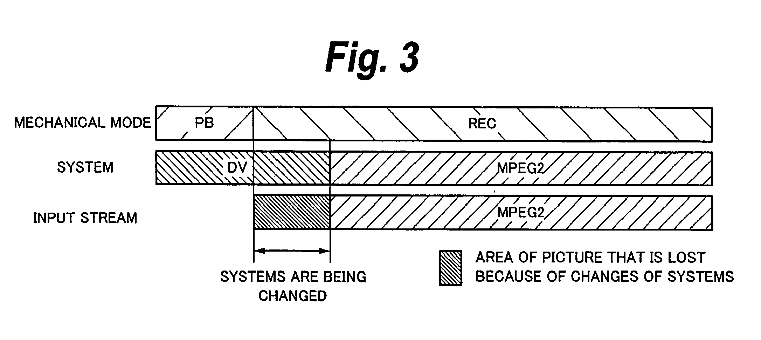

Such non-reproducible periods also take place when video data that are input from the outside are recorded. With reference to Fig. 3, it is assumed that the mechanical mode, which is the state of a mechanical deck mounted to a device such as a video camera, is the reproduction (PB: Playback) mode and the system of the device is the state corresponding to the DV system. In this state, if a stream according to the MPEG2 system is input from the outside of the device and the mechanical mode is changed from the PB mode to the record (REC) mode, it is necessary to change the operation of the system of the device from the DV system to the MPEG2 system. In this case, when the operation of the system of the device is changed from the DV system to the MPEG2 system, a system change period of several seconds takes place. During this period, the input stream is not recorded.

To solve this problem, in the past, state change tables for individual formats were prepared. A special process for a state change between formats was performed. However, in this method, the algorithm for the special process became large and complicated.

In addition, in the past, a system that automatically changes one format to another format and operates in the changed format was not known. Thus, when one format was changed to another format, a problem that is specific to the system tended to take place.

In recent years, a technique of which a recording and reproducing apparatus and a personal computer are connected through a predetermined interface such as for example the Institute of Electrical and Electronics Engineers (IEEE) 1394 and a video stream reproduced from a recording medium is transferred from the recording and reproducing apparatus to the personal computer has been widely used. In this case, in the related art, the format of the video stream that is transferred is automatically distinguished. Thus, when video data have been recorded in a plurality of different formats on a recording medium and successively reproduced therefrom, there is a possibility of which a stream is transferred to a destination device that is connected through the interface and that does not handle the format thereof. In this case, there is a high possibility of which the system of the destination device gets hung up.

In view of the foregoing, it would be desirable to provide a reproducing apparatus and a reproducing method that can easily change states when video data having different formats are successively reproduced.

In view of the foregoing, it would be also desirable to provide a reproducing apparatus and a reproducing method that can successively reproduce video data having different formats without a delay of data at format change points.

In view of the foregoing, it would be also desirable to provide a reproducing apparatus and a reproducing method that can successively reproduce video data having different formats without a problem in a reception side device when the video data are transmitted to an external computer device or the like through a communication section.

According to an embodiment of the present invention, there is provided a reproducing apparatus that is capable of reproducing digital signals that have a plurality of different formats from recording medium, the apparatus includes a format determination section, a reproduction section, and a state change management section. The format determination section determines the format of a digital signal reproduced from the recording medium. The reproduction section reproduces a digital signal from the recording medium in a predetermined state. The state change management section manages the change of the state of the reproduction section according to the determined result of the format determination section.

According to an embodiment of the present invention, there is provided a reproducing method of reproducing digital signals that have a plurality of different formats from recording medium. The format of a digital signal reproduced from the recording medium is determining. A digital signal is reproduced from the recording medium in a predetermined state. The change of the state of the reproduction section is managed according to the format determined result.

As described above, according to an embodiment of the present invention, the reproduction state changes are managed corresponding to the determined result of the format of a digital signal recorded on a recording medium so that the digital signal recorded on the recording medium is reproduced in a predetermined state. Thus, the reproduction states of digital signals recorded on the recording medium can be changed corresponding to the formats of the digital signals.

According to an embodiment of the present invention, the format of a digital signal reproduced from a recording medium is detected and a mechanical mode is automatically changed corresponding to the detected format. Thus, when the formats of the digital signals that are reproduced from the recording medium are changed, the user can continuously watch reproduced pictures without performing any operation at format change points.

When formats are changed, if the changed format does not handle a mechanical mode that the former format handles, the mechanical mode is replaced with another mechanical mode that apparently does not largely change the reproduced image. Thus, when formats are changed, the user is provided with a state as if they were not changed.

According to another embodiment of the present invention, since the user can designate one of mechanical modes for a first format and a second format, even if the format of a digital signal reproduced from a recording medium is changed to another format, since a delay due to the format changes does not take place, when a digital signal is edited in a single format, the digital signal can be prevented from being lost.

According to another embodiment of the present invention, when a digital signal reproduced from a recording medium is transmitted to an external computer device or the like through a communication interface, since the user can designate the format of the digital signal transmitted to the computer device, even if the format of the digital signal is changed to another format while the digital signal is being reproduced, a problem can be prevented from taking place in the computer device.

The invention will be described hereinbelow, purely by way of example, and with reference to the Figures, in which:
Fig. 1 is a schematic diagram showing an example of frames of one GOP composed of 15 frames arranged in the recording order according to the MPEG2 system;
Fig. 2 is a schematic diagram describing non-reproducible periods that take place when the DV system is changed to the MPEG2 system and vice versa;
Fig. 3 is a schematic diagram describing non-reproducible periods that take place when the DV system is changed to the MPEG2 system for video data that are input from the outside;
Fig. 4 is a block diagram showing an example of the structure of a video camera apparatus according to an embodiment of the present invention;
Fig. 5A and Fig. 5B are schematic diagrams showing an example of a recording format of a magnetic tape;
Fig. 6 is a schematic diagram showing an example of the structure of an ITI area;
Fig. 7 is a block diagram showing an example of a structure that determines the format of a digital video signal reproduced from a magnetic tape;
Fig. 8 is a flow chart showing an example of a format determination process;
Fig. 9 is a schematic diagram describing an operation of an embodiment of the present invention;
Fig. 10 is a flow chart showing an example of mechanical mode changes according to the embodiment shown in Fig. 9;
Fig. 11 is a schematic diagram showing an example of a trigger code retrieval table;
Fig. 12 is a schematic diagram showing an example of a final mode retrieval table;
Fig. 13 is a schematic diagram showing an example of a final mode conversion table;
Fig. 14 is a schematic diagram showing that areas in the DV format recorded as base areas are dispersed in areas recorded in the HD2 format; and
Fig. 15 is a schematic diagram showing an example of screens that appear when a system that has been set is different from the format of a digital video signal is reproduced or input.

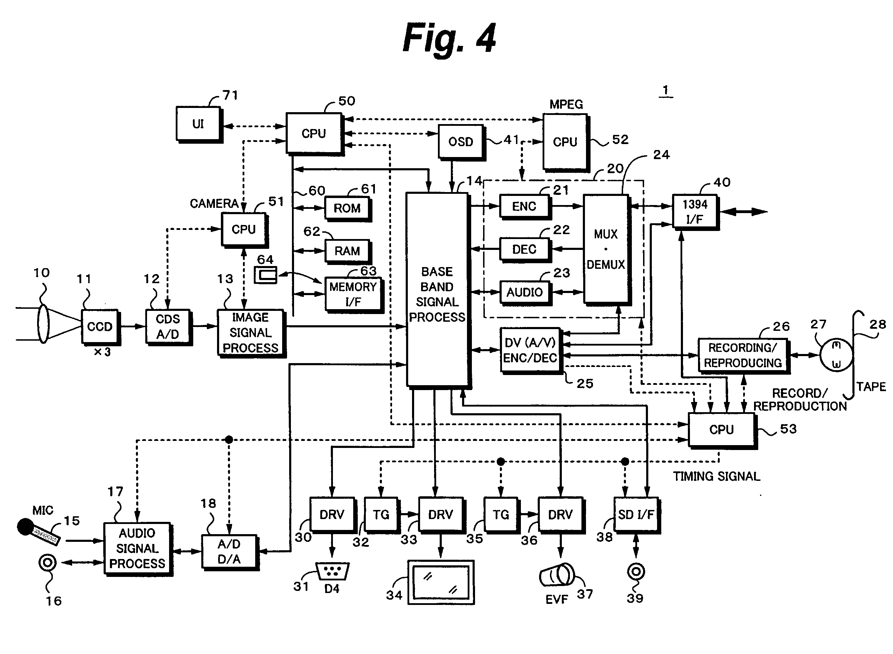

Next, with reference to the accompanying drawings, embodiments of the present invention will be described. Fig. 4 shows an example of the structure of a video camera apparatus 1 according to an embodiment of the present invention. The video camera apparatus 1 records a digital video signal captured by an image sensor on a magnetic tape and reproduces a digital video signal from a magnetic tape. The video camera apparatus 1 can handle DV format, video format of 1280 pixels x 720 lines (progressive) according to the MPEG2 system (hereinafter referred to as the HD1 format), and video format of 1440 pixels x 1080 lines (interlace) according to the MPEG2 system (hereinafter referred to as the HD2 format).

In other words, the video camera apparatus 1 can mixedly record both a digital video signal having the DV format and a digital video signal having the HD2 format on one magnetic tape. In addition, the video camera apparatus 1 can reproduce a digital video signal from one magnetic tape on which a digital video signal having the DV format, a digital video signal having the HD1 format, and a digital video signal having the HD2 format have been mixedly recorded.

When the video camera apparatus 1 records a video signal in the DV format "color system = 4 : 1 : 1, picture size = 720 pixels x 480 lines" to a magnetic tape, the video camera apparatus 1 can record an audio signal that is one of two audio modes " number of quantizer bits = 12 bits, sampling frequency = 32 kHz" and "number of quantizer bits = 16 bits, sampling frequency = 48 kHz" to the magnetic tape. When the video camera apparatus 1 records a video signal in the HD2 format "color system = 4 : 2 : 0, picture size = 1080i (1440 pixels x 1080 lines)" to a magnetic tape, the video camera apparatus 1 can record an audio signal "number of quantizer bits = 16 bits, sampling frequency = 48 kHz" to the magnetic tape.

The video camera apparatus 1 has a plurality of central processing units (CPUs) 50, 51, 52, and 53. The CPUs 50, 51, 52, and 53 cooperatively operate to control the whole video camera apparatus 1. The CPUs 50, 51, 52, and 53 have respective random access memories (RAMs) and read-only memories (ROMs) (not shown). The CPUs 50, 51, 52, and 53 operate according to programs stored in their ROMs. The RAMs are used as work memories of the CPUs.

As assigned roles of the plurality of CPUs, the CPU 50 controls a user interface 71 and the whole video camera apparatus 1. The CPU 51 controls an image capture process including a process for an optical system 10. The CPU 52 performs encoding and decoding processes according to the MPEG2 system and multiplexing and demultiplexing processes for video data and audio data of a program stream (PS) according to the MPEG2 system. The CPU 53 controls recording and reproducing operations for a magnetic tape and mechanism, for example, controls changes of mechanical modes for the recording and reproducing operations, and changes of operation modes of the signal process system.

In addition, a bus 60 is connected to the CPU 50. Connected to the bus 60 are a rewritable ROM 61 such as a flash memory and a RAM. Connected to the bus 60 is also a memory interface 63 to which a detachable and rewritable ROM (for example, a flash memory) 64 can be mounted.

The user interface 71 is connected to the CPU 50. The user interface 71 has switches and indication devices. With the switches, various settings and operations for the video camera apparatus 1 can be performed. The indication devices are for example light emitting diodes (LEDs) . The indication devices indicate states of the video camera apparatus 1. With the user interface 71, the user can perform various settings and various operations for the video camera apparatus 1 to capture a picture of an object, record a video signal of the captured picture, and reproduce the recoded video signal.

Next, the recording operation of the video camera apparatus 1 will be described. To cause the video camera apparatus 1 to perform the recording operation, the user operates the user interface 71 (not shown). At this point, the user selects the HD2 format or the DV format in which a digital video signal is recorded. To record a digital video signal in the DV format, the user selects 12 bits or 16 bits as the resolution of an audio signal recorded together with the digital video signal. Instead, the user may be able to select any mode that the video camera apparatus 1 permits in each format.

A control signal corresponding to the operation that the user has performed for the user interface 71 is supplied to the CPU 50. Corresponding to the control signal, the CPU 50 generates a display control signal that causes a predetermined display screen such as an operation screen to appear. In addition, the CPU 50 informs each section of the video camera apparatus 1 of the record mode and the recording format that have been changed and selected. When the CPU 53 has been informed of them, it controls the mechanism that drives the rotation of a rotation head 27 and the traveling of a magnetic tape 28 and the signal process system so that they operate in the record mode.

Rays emitted from an object enter a charge coupled device (CCD) 11, which is an image sensor, through an optical system 10. The optical system 10 contains a focus mechanism, a zoom mechanism, a diaphragm mechanism, and so forth that are omitted in Fig. 4. In this example, the CCD 11 is so-called three-CCD type that has three independent CCDs for the primary colors red (R), green (G), and blue (B). Thus, CCD 11 outputs signals corresponding to these colors R, G, and B.

A captured image signal is output from the CCD 11. The captured image signal is supplied to a correlated double sampling (CDS) and A/D conversion circuit 12. The CDS and A/D conversion circuit 12 samples the image signal and obtains a digital video signal. An output of the CDS and A/D conversion circuit 12 is supplied to an image signal process circuit 13. The image signal process circuit 13 performs predetermined video signal processes such as a gain adjustment process, a Y process, and a white balance process for the supplied digital video signal and outputs the processed signal. The output signal of the image signal process circuit 13 is supplied to a base band signal process circuit 14.

The CDS and A/D conversion circuit 12 and the image signal process circuit 13 are controlled by the CPU 51 in a predetermined manner.

Sound is collected by a microphone 15 and converted into an analog audio signal. An audio signal process circuit 17 performs an amplification process, a sound quality compensation process, a noise reduction process, and so forth for the analog audio signal in predetermined manners. The resultant analog audio signal that is output from the audio signal process circuit 17 is supplied to an A/D conversion and D/A conversion circuit 18. The A/D conversion and D/A conversion circuit 18 converts an analog audio signal into a digital audio signal and a digital audio signal into an analog audio signal. A digital audio signal is output from the A/D conversion and D/A conversion circuit 18 and supplied to the base band signal process circuit 14.

Instead, an analog audio signal may be input from an audio input and output terminal 16. Specifically, the audio input and output terminal 16 is composed of an audio input terminal and an audio output terminal as discrete terminals. The analog audio signal that is input from the audio input and output terminal 16 is supplied to the A/D conversion and D/A conversion circuit 18 through an audio signal process circuit 17. The A/D conversion and D/A conversion circuit 18 converts the analog audio signal into a digital audio signal. The digital audio signal is supplied to the base band signal process circuit 14.

The video camera apparatus 1 can select one from a plurality of bit resolutions for example 12 bits/sample and 16 bits/sample with which the A/D conversion and D/A conversion circuit 18 converts an analog signal into a digital signal corresponding to a record mode and a user's selection. The bit resolution of the digital audio signal is designated with a control signal supplied from the CPU 53 corresponding to a command issued by the CPU 50 corresponding to an operation of for example the user interface 71.

In addition, the audio signal process circuit 17 can detect the connection state of the microphone 15 and the connection state of the audio input and output terminal 16. Moreover, the A/D conversion and D/A conversion circuit 18 detects the signal level of the analog audio signal, which is input from the microphone 15 and the audio input and output terminal 16, and outputs the signal level as digital data before the A/D conversion and D/A conversion circuit 18 converts the analog audio signal into a digital audio signal. The detected result of the audio signal process circuit 17 for the connection state of the audio input and output terminal 16 and the level data of the audio signal are supplied to the CPU 53.

The base band signal process circuit 14 performs a predetermined signal process for the supplied digital video signal and digital audio signal and outputs the processed signals. The base band signal process circuit 14 performs for example a picture size conversion process, a color system conversion process, a field process, and so forth corresponding to a designated format of the HD2 format and the DV format for a digital video signal. In addition, the base band signal process circuit 14 performs a picture size conversion process and other various processes for a digital video signal so that it can be displayed on a display panel 34 and a view finder (EVF) 37 that monitor a captured image.

The digital video signal and the digital audio signal that are output from the base band signal process circuit 14 are supplied to an MPEG process section 20 and a DV process section 25. The digital video signal that is output from the base band signal process circuit 14 is supplied to the display panel 34 and the view finder 37 and output through a D4 terminal 31 and an SD terminal 39 as external output terminals.

The digital video signal processed for the display panel 34 by the base band signal process circuit 14 is supplied to for example a driver 33. The driver 33 outputs a digital video signal corresponding to a timing signal that is output from a timing generator (TG) 32 controlled by the CPU 53 to drive the display panel 34, which is for example a liquid crystal display (LCD). Likewise, the digital video signal processed for the EVF 37 by the base band signal process circuit 14 is supplied to a driver 36. The driver 36 outputs the supplied digital video signal corresponding to a timing signal that is output from a timing generator (TG) 35 controlled by the CPU 53 to drive the EVF 37, which is for example an LCD.

In addition, the digital video signal that is output from the base band signal process circuit 14 is driven by a driver 30 and output through the D4 terminal 31. Likewise, the digital video signal that is output from the base band signal process circuit 14 is supplied to an SD I/F 38. The SD I/F 38 maps the digital video signal in a format according to the standard definition (SD). The mapped data are output through an SD input/output terminal 39. Specifically, the SD input/output terminal 39 is composed of an SD input terminal and an SD output terminal.

On the other hand, the digital video signal that has been output from the base band signal process circuit 14 and supplied to the MPEG process section 20 is input to an MPEG encoder (ENC) 21. The MPEG ENC 21 encodes the digital video signal according to the MPEG2 system. The MPEG ENC 21 performs inter-frame compression according to predictive encoding using a moving vector. At this point, one I picture, a predetermined number of P pictures, and a predetermined number of B pictures are placed every 15 frames as one GOP so that the digital video signal is interframe-compressed. The interframe-compressed digital video signal is intraframe-compressed according to the Discrete Cosine Transform (DCT). In addition, with variable length code, the digital video signal that has been intraframe-compressed is compression-encoded. The compressed digital video signal that is output from the MPEG ENC 21 is supplied to an MUX/DEMUX 24.

On the other hand, the digital audio signal that is output from the base band signal process circuit 14 is supplied to an audio codec section 23. The audio codec section 23 performs a compression-encoding process for a digital audio signal that is recorded and a decoding process for a digital audio signal that is reproduced. The audio codec section 23 compression-encodes the digital audio signal according to for example the MPEG1 layer 2 system and supplies the compressed digital audio signal to the MUX/DEMUX 24.

The MUX/DEMUX 24 functions as a multiplexer for a digital video signal and a digital audio signal that are recorded and as a demultiplexer for a digital video signal and a digital audio signal that are reproduced. When the MUX/DEMUX 24 functions as the multiplexer, the MUX/DEMUX 24 divides the supplied compressed digital video signal and the supplied compressed digital audio signal into packets having a predetermined size, adds a header to each packet, multiplexes the compressed digital video signal and the compressed digital audio signal as a packetized elementary stream (PES) defined in the MPEG system, and outputs the PES. The PES that is output from the MUX/DEMUX 24 is supplied to a recording/reproducing section 26.

In contrast, the digital video signal supplied to the DV process section 25 is interframe-compressed in the DV format according to the DCT system. The compressed digital video signal and the digital audio signal supplied to the DV process section 25 are mapped as a stream in the DV format and output. The stream that is output from the DV process section 25 is supplied to the recording/reproducing section 26.

The recording/reproducing section 26 selectively receives data corresponding to the DV format or the HD2 format designated by the user interface (not shown). Instead, only the function of the MPEG process section 20 and the DV process section 25 corresponding to the designated function may be validated. The recording/reproducing section 26 performs a predetermined error correction encoding process for the received data, record-encodes the data, and generates a record signal that can be recorded on the magnetic tape 28. The record signal that is output from the recording/reproducing section 26 is supplied to the rotation head 27.

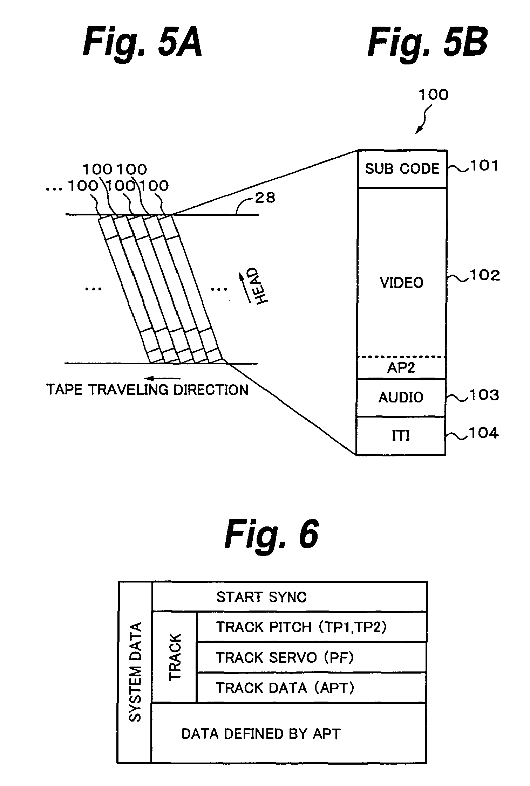

The record signal is recorded on the magnetic tape 28 by the rotation head 27 according to the helical scan system of which tracks are diagonally formed on the magnetic tape 28. Fig. 5A and Fig. 5B show an example of a recording format of the magnetic tape 28. As shown in Fig. 5A, tracks 100, 100, and so forth are diagonally formed on the magnetic tape 28. One frame of the digital video signal is recorded with a plurality of tracks 100, 100, and so forth. As denoted by arrow marks in Fig. 5A, the magnetic tape 28 is traveled from the left to the right. The rotation head 27 traces the magnetic tape 28 in the upper direction of the drawing.

Each track 100 has an insert and track information (ITI) area 104, an audio area 103, a video area 102, and a sub code area 101 in the trace direction of the rotation head 27 according to the current DV format as shown in Fig. 5B. An edit gap (not shown) is formed between each area. System data are recorded in the ITI area 104. When the video format is the HD1 format or the DV format, an AP2 area is formed at the beginning of the video area 102. When the video format is the HD2 format, the AP2 area is not formed.

Fig. 6 shows an example of the structure of the ITI area 104. The ITI area 104 contains a start sync, information about a track pitch (TP1, TP2), information about a track servo (PF), information that defines the data structure of the track (APT), and system data defined by APT from the beginning of the track. When data are recorded in the HD2 format, value "010b" is recorded in the APT. When data are recorded in the DV format or when data are recorded in the HD1 format, value "000b" is recorded in the APT.

The AP2 defines the data structure of the video area 102. When data are recorded in the DV format, value "000b" is recorded in the AP2. When data are recorded in the HD1 format, value "001b" is recorded in the AP2.

Next, the reproducing operation of the video camera apparatus 1 will be described. To cause the video camera apparatus 1 to perform the reproducing operation, the user operates the user interface (not shown). A control signal corresponding to the operation is supplied from the user interface to the CPU 50. The CPU 50 generates a display control signal that causes a predetermined operation screen such as an operation screen to appear and informs each section of the video camera apparatus 1 of the reproduction mode that has been changed. When the CPU 53 has been informed of the reproduction mode, it controls the mechanism that drives the rotation of the rotation head 27 and the traveling of the magnetic tape 28 and the signal process system so that they operate in the reproduction mode.

When the video camera apparatus 1 performs the reproducing operation, the rotation head 27 traces the tracks 100, 100, and so forth of the magnetic tape 28 from the ITI area 104 and the CPU 53 determines the format of the digital video signal to be reproduced according to the value of the APT in the ITI area 104 and the value of the AP2 in the video area 102. First, the CPU 53 determines whether the format of the digital video signal to be reproduced is the HD2 format, the DV format, or the HD1 format according to the value of the APT. When the determined result represents that the format of the digital video signal to be reproduced is the DV format or the HD1 format, the CPU 53 determines whether the format of the digital video signal to be reproduced is the DV format or the HD1 format according to the value of the AP2 at the end of the video area 102.

The process that the video camera apparatus 1 performs the reproducing operation is reverse of the process that the video camera apparatus 1 performs the recording operation. A reproduction signal reproduced from the magnetic tape 28 traced by the rotation head 27 is supplied to the recording/reproducing section 26. The recording/reproducing section 26 demodulates the supplied data in a predetermined manner and obtains a reproduction digital signal. The recording/reproducing section 26 performs a decoding process for the reproduced digital signal with error correction code and corrects error of the digital signal. The reproduction digital signal that has been error-corrected is temporarily supplied to the DV process section 25.

The DV process section 25 performs the foregoing format determination process for the supplied reproduction digital signal. As a result, when the format of the reproduction digital video signal is the DV format or the HD1 format, the DV process section 25 process the supplied reproduction digital signal and obtains a reproduction digital video signal and a reproduction digital audio signal. The reproduction digital video signal and the reproduction digital audio signal are supplied to the base band signal process circuit 14.

When the determined result for the reproduction digital signal represented that the format of the reproduction digital video signal is the HD2 format, the reproduction digital signal is supplied to the MPEG process section 20 and input to the MUX/DEMUX 24.

In this example, the format of a digital video signal to be reproduced is automatically determined. Instead, the format of a digital video signal to be reproduced may be manually input by the user through the user interface 71.

As described above, when the video camera apparatus 1 performs the reproducing operation, the MUX/DEMUX 24 functions as a demultiplexer. The MUX/DEMUX 24 takes data from a packet of the supplied reproduction digital signal according to the header information of the packet, demultiplexes the data into a digital video signal and a digital audio signal, and restores the original stream. The restored digital video signal is supplied to an MPEG decoder (DEC) 22. The DEC 22 decodes the reproduction digital video signal and obtains a decoded base band reproduction digital video signal. Likewise, the restored digital audio signal is supplied to the audio codec section 23. The audio codec section 23 decodes the digital audio signal and obtains a base band reproduction digital audio signal. The reproduction digital video signal and the reproduction digital audio signal are supplied to the base band signal process circuit 14.

The base band signal process circuit 14 performs a predetermined signal process for the supplied reproduction digital video signal. The base band signal process circuit 14 performs for example a picture size conversion process, a color system conversion process, a frame process, and so forth for the reproduction digital video signal according to the format (HD2 format, DV format, or HD1 format) in the same manner as the recording operation. In addition, the base band signal process circuit 14 performs a predetermined picture size conversion process and various processes for the digital video signal so that the digital video signal can be displayed on the display panel 34, which is a monitor of the photographed picture, and can be output through the D4 terminal 31 and the SD terminal 39, which are external output terminals.

The base band signal process circuit 14 also processes the reproduction digital audio signal in a predetermined manner so that it can be properly output to the outside. After the base band signal process circuit 14 has properly processed the reproduction digital audio signal, the base band signal process circuit 14 supplies the processed reproduction digital audio signal to the A/D conversion and D/A conversion circuit 18. The A/D conversion and D/A conversion circuit 18 converts the reproduction digital audio signal into an analog audio signal. The analog audio signal is obtained from the audio input and output terminal 16 through the audio signal process circuit 17.

An on-screen display (OSD) section 41 is connected to the base band signal process circuit 14. The OSD section 41 generates image signals other than captured image signals, for example a menu screen on which the user performs various settings for the video camera apparatus 1 and a status screen on which the user checks the input audio level and the state of the video camera apparatus 1 according to a command received from the CPU 50. Data with which these various screens are displayed are pre-stored in the ROM 61 connected to the bus 60. When the user can designate a display item and so forth, data that the user has set the designated display item is stored in a RAM 62. Instead, the external memory 64 may be disposed in the memory interface 63. Data stored in the external memory 64 may be read and used for the OSD display. In addition, data that that the user has set may be stored in the external memory 64.

The OSD image signal generated by the OSD section 41 is supplied to the base band signal process circuit 14. The base band signal process circuit 14 combines the OSD image signal with a digital video signal of a captured image supplied from the image signal process circuit 13. The digital video signal with which the OSD image signal has been combined is displayed on the display panel 34 and the EVF 37 according to the operation of the user interface. The digital video signal may be output through the D4 terminal 31 and the SD input/output terminal 39.

The video camera apparatus 1 has a communication interface that can communicate with for example a computer device. In the example shown in Fig. 4, the video camera apparatus 1 has a 1394 I/F 40 according to the Institute of Electrical and Electronics Engineers (IEEE) 1394 standard. The 1394 I/F 40 allows the video camera apparatus 1 to exchange a digital video signal and a digital audio signal with the external computer device. The CPU 53 is informed of the connection state of a predetermined cable to the 1394 I/F 40 and the data communication state through the 1394 I/F 40.

A digital video signal and a digital audio signal are obtained from the MUX/DEMUX 24 and the DV process section 25 and supplied to the 1394 I/F 40. The digital video signal and the digital audio signal are mapped in a predetermined format with which the computer device can deal and transmitted according to the IEEE 1394 protocol. The digital video signal and the digital audio signal transmitted from the computer device according to the IEEE 1394 protocol may be received by the 1394 I/F 40 and supplied to the MUX/DEMUX 24 and the DV process section 25.

Regardless of whether the video camera apparatus 1 is performing the recording operation or the reproducing operation, the video camera apparatus 1 can perform the communication process for the digital video signal and the digital audio signal with the external computer device.

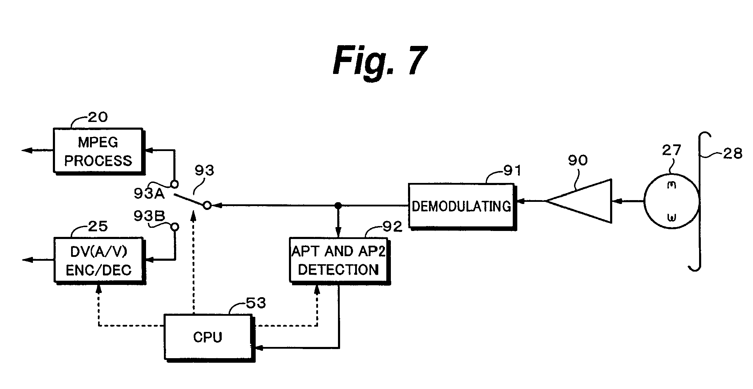

Next, a method of determining the format of a digital video signal reproduced from the magnetic tape 28 will be described in brief. For example, with the structure shown in Fig. 7, the rotation head 27 traces the tracks 100, 100, and so forth formed on the magnetic tape 28. A reproduction signal is output from the rotation head 27 and supplied to an amplifier 90. The amplifier 90 amplifies the reproduction signal. The amplified signal is supplied to a demodulating circuit 91. The demodulating circuit 91 performs a demodulating process for the amplified signal in a predetermined manner and obtains a digital signal. The digital signal is supplied to a switch circuit 93 and an APT and AP2 detection circuit 92. The APT and AP2 detection circuit 92 extracts the APT from the supplied digital signal and supplies the APT to the CPU 53. When necessary, the APT and AP2 detection circuit 92 extracts the AP2 from the supplied digital signal and supplies the AP2 to the CPU 53. The CPU 53 determines whether the format of the digital signal reproduced from the magnetic tape 28 is the HD2 format, the DV format, or the HD1 format according to the values of the APT and AP2.

When the CPU 53 has determined that the format of the reproduction digital signal is the HD2 format, the CPU 53 causes the switch circuit 93 to select a selection output terminal 93A to supply the digital signal that is output from the demodulating circuit 91 to the MPEG process section 20. When the CPU 53 has determined that the format of the reproduction digital signal is the DV format or the HD1 format, the CPU 53 causes the APT and AP2 detection circuit 92 to also extract the value of the AP2 from the reproduction digital signal. The CPU 53 identifies the format of the reproduction digital signal is the DV format or the HD1 format according to the value of the AP2 supplied from the APT and AP2 detection circuit 92, causes the switch circuit 93 to select a selection output terminal 93B to supply the digital signal that is output from the demodulating circuit 91 to the DV process section 25, and informs the DV process section 25 that the format of the reproduction digital signal is the DV format or the HD1 format.

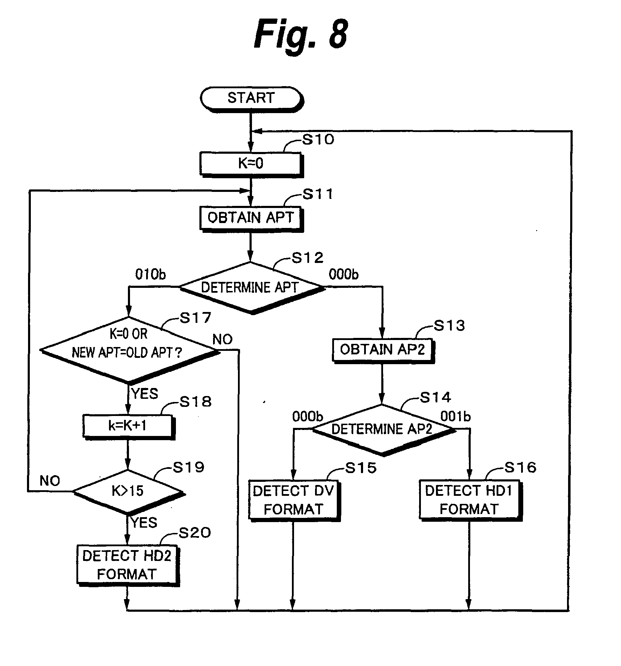

Fig. 8 is a flow chart showing an example of the format determination process of the CPU 53. At step S10, value K of an HD2 format detection counter is reset. At step S11, the ATP is obtained according to the detected result of the APT and AP2 detection circuit 92. At the next step, S12, the value of the obtained ATP is determined.

When the determined result at step S12 represents that the value of the APT is "000b," the flow advances to step S13. At step S13, a process that determines whether the format of the reproduction digital signal is the DV format or the HD1 format is performed. At step S13, the APT and AP2 detection circuit 92 is caused to obtain the AP2. Accordingly, the APT and AP2 detection circuit 92 obtains the AP2. At step S14, the value of the obtained AP2 is determined. When the determined result at step S14 represents that the value of the AP2 is "000b," the format of the reproduction digital signal is the DV format (at step S15). When the determined result at step S14 represents that the value of the AP2 is "001b," the format of the reproduction digital signal is the HD1 format (at step S16). According to step S14 and S15, the selection output terminal 93B of the switch circuit 93 is selected. After step S15 or S16, the flow returns to step S10. At step S10, the next track is determined.

When the determined result at step S12 represents that the value of the APT is "010b," since there is a possibility of which the HD2 format has been detected, the flow advances to step S17. After step S17, it is determined whether the HD2 format has been detected for a plurality of tracks (in this example, 15 tracks). At step S17, it is determined whether the counter value K is "0" or whether the new APT, namely the APT obtained at step S11, matches the old APT, namely the APT obtained at step S11 for the preceding track. When the counter value K is not "0" and the new APT is different from the old APT, the flow returns to step S10. At step S10, the next track is determined.

When the determined result at step S17 represents that the counter value K is "0" or the new APT matches the old APT, the flow advances to step S18. At step S18, the counter value K is incremented by "1." At the next step, S19, it is determined whether the counter value K exceeds "15." When the determined result at step S19 represents that the counter value K does not exceed "15," the flow returns to step S11. At step S11, the next track is determined. In contrast, when the determined result at step S19 represents that the counter value K exceeds "15," the flow advances to step S20. At step S20, the format of the reproduction digital signal is the HD2 format. In addition, the selection output terminal 93A of the switch circuit 93 is selected. After step S20, the flow returns to step S10. At step S10, the next track is determined.

Next, a first embodiment of the present invention will be described. According to the first embodiment of the present invention, when the video camera apparatus 1 deals with a plurality of formats that differ in signal processes, data arrangements, and so forth, a sequence of processes of the video camera apparatus 1 is defined as a state change to reproduce data having the different formats from a recording medium (magnetic tape 28). The state change is defined for each format. When the user performs the format change operation or whenever the format of data recorded on the recording medium is changed to another format, the state change management of the video camera apparatus 1 is autonbmously switched.

The state change represents that for example a first reproduction state (for example, double speed reproduction) is changed to a second reproduction state (for example, single speed reproduction). According to the first embodiment of the present invention, the state change is defined for each format. For example, a state change source and a state change destination of each format are defined in such a manner that when the first format is changed to the second format, reproduction state A in the first format is changed to reproduction state B in the second format.

While the video camera apparatus 1 is reproducing a digital video signal from the magnetic tape 28, when the format of the digital video signal is changed for example from the DV format (or the HD1 format, hereinafter omitted) to the HD2 format or the HD2 format changes to the DV format, the system of the video camera apparatus 1 automatically changes the state. When the video camera apparatus 1 receives a user's command while the video camera apparatus 1 is reproducing a digital video signal having the HD2 format from the magnetic tape 28, the system of the video camera apparatus 1 automatically changes the state.

As a first example of the real process assuming that there are two types of different formats (referred to as the first format and the second format), for a mechanical mode that one format has and the other format does not have, when the format of a digital video signal is changed from one format to the other format, the CPU 53 manages the state change so that the mechanical mode designated in one format is forcibly replaced with a mechanical mode executable in the other format. In this case, a mechanical mode to be forcibly replaced is pre-set so that a picture that is expected to appear in the forcibly replaced mechanical mode is apparently close to the picture in the mechanical mode that is not forcibly replaced.

As a second example of the real process, when the video camera apparatus 1 cannot perform a process according to a user's operation due to a restriction on the format of a digital video signal that the video camera apparatus 1 is reproducing, the system of the video camera apparatus 1 automatically changes the current state to another executable state and informs the user that the state was changed to the executable state. For example, when the user tries to cause the video camera apparatus 1 to issue a final mode that is prohibited in the first format and the second format or when the final mode that the video camera apparatus 1 is issuing is prohibited from being issued, the CPU 53 manages the state change so that the final mode is forcibly replaced with another final mode. In this example, the final mode represents a mechanical mode after the state has been changed.

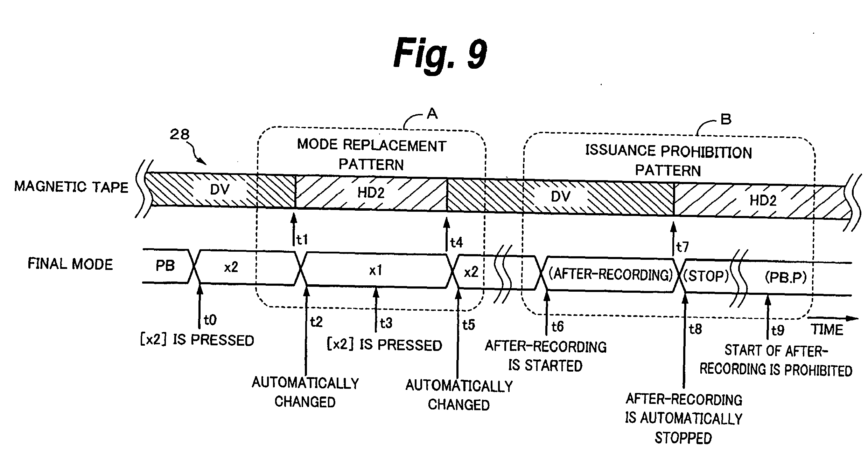

Next, with reference to Fig. 9, the first example of the real process will be described. Area A shown in Fig. 9 corresponds to the first example of the real process. Digital video signals having the DV format and the HD2 format are mixedly recorded on the magnetic tape 28. For the DV format, the video camera apparatus 1 can perform variable speed reproductions such as double speed reproduction and low speed reproductions such as step forward reproduction of which the reproduction speed of a digital video signal is different from the record speed thereof on time axis. On the other hand, the reproduction modes that the video camera apparatus 1 can perform in the HD2 format are restricted against the DV format. For the HD2 format, the video camera apparatus 1 can perform for example only single speed reproduction.

In Fig. 9, it is assumed that when the video camera apparatus 1 is reproducing a digital video signal in the DV format, the user presses a predetermined key of the user interface 71 at time to to cause the video camera apparatus 1 to perform double speed reproduction. Since the DV format supports the double speed reproduction, the mechanical mode of the video camera apparatus 1 is changed to the double speed reproduction mode. When the format of a digital video signal recorded on the magnetic tape 28 is changed from the DV format to the HD2 format at time t₁, as described in Fig. 6 to 8, the CPU 53 detects that the mode was changed. The CPU 53 informs the CPU 50 that the mode was changed.

As described above, the video camera apparatus 1 does not handle the double speed reproduction in the HD2 format. Thus, the CPU 50 sends another operation mode that the video camera apparatus 1 handles in the HD2 format as a final mode to the CPU 53. In other words, the CPU 50 replaces the operation mode that the user has designated with a final mode that the video camera apparatus 1 can operate in the HD2 format. It is preferred that operation and reproduced picture of the replaced reproduction mode as a final mode be the closest to those of the final mode that has not been replaced to prevent the user from feeling uncomfortable.

The relationships between user inputs and the recording formats and final modes of the magnetic tape 28 are pre-stored as a table in the ROM 61. The CPU 50 references the table for each user input and determines a final mode. Information about an operation that was replaced and not executed is stored in a memory (RAM 62, a register of the CPU 50, or the like).

In Fig. 9, when the user interface 71 designates the double speed reproduction at time t₃ while the video camera apparatus 1 is reproducing a digital video signal in the HD2 format, since the video camera apparatus 1 does not handle the double speed reproduction in the HD2 format, like the above example, the CPU 50 replaces the designated double speed reproduction mode in the HD2 format with the closest mode (in this example, the single speed reproduction mode) and sends the replaced mode to the CPU 53. In the example shown in Fig. 9, when the DV format is changed to the HD2 format, since the mode has been replaced with the single speed reproduction mode of the final mode, the video camera apparatus 1 continuously performs the single speed reproduction.

When the recording format of a digital video signal recorded on the magnetic tape 28 is changed from the HD2 format to the DV format at time t₄, the CPU 53 detects that the HD2 format was changed to the DV format. The CPU 53 informs the CPU 50 that the HD2 format was changed to the DV format. When the CPU 50 has been informed that the HD2 format was changed to the DV format, the CPU 50 restores the replaced operation mode to the original final mode (the double speed reproduction mode designated at time t₃).

In the foregoing example, the double speed reproduction mode was described. It should be appreciated that the mode that is replaced with another mode is not limited to the double speed reproduction mode. When the DC format of a digital video signal that the video camera apparatus 1 is reproducing from the magnetic tape 28 in the reverse step reproduction mode to the HD2 format, the reverse step reproduction mode in the DV format is replaced with a mode that operates in the HD2 format and whose reproduction picture is the closest to that of the reverse step reproduction, for example reverse single speed reproduction mode.

In addition, the video camera apparatus 1 can perform an edit search operation that searches for an edit point. As described above, in the HD2 format, one GOP is composed of 15 frames. Thus, when digital video signals are connected, no editing operation is performed at frames. Thus, the CPU 50 does not receive edit search operation commands while the video camera apparatus 1 is reproducing a digital video signal in the HD2 format. At this point, the final mode that designates an edit search can be replaced with a final mode that does not change the state.

Next, with reference to Fig. 9, the second example of the real process will be described. Area B shown in Fig. 9 corresponds to the second example of the real process. In the second example, as an operation mode that the video camera apparatus 1 does not handle for a format, an after-recording operation that the video camera apparatus 1 performs for a digital video signal in the HD2 format will be described. The video camera apparatus 1 does not handle the after-recording operation for a digital video signal in the HD2 format. While the video camera apparatus 1 is reproducing a digital video signal in the HD2 format, the video camera apparatus 1 is prohibited from issuing a final mode of the after-recording operation.

The after-recording operation is an operation of which the video camera apparatus 1 records an audio signal in a predetermined period of a digital video signal that the video camera apparatus 1 recorded on the magnetic tape 28 while the video camera apparatus 1 is reproducing the digital video signal. When the video camera apparatus 1 recorded an audio signal on the magnetic tape 28, the video camera apparatus 1 overwrites the digital audio signal in the after-recording area with a new digital audio signal.

In Fig. 9, it is assumed that while the video camera apparatus 1 is reproducing a digital video signal in the DV format, the user interface (not shown) designates the after-recording operation. Since the video camera apparatus 1 can handle the after-recording operation for a digital video signal in the DV format, the CPU 50 designates the after-recording operation as a final mode and informs the CPU 53 that the after-recording operation has been designated as a final mode. When the CPU 53 has been informed that the after-recording operation has been designated as a final mode, the CPU 53 causes the mechanism and the signal process system to perform the after-recording operation. The video camera apparatus 1 starts the after-recording operation at time t₆.

While the video camera apparatus 1 is performing the after-recording operation, when the format of a digital video signal recorded on the magnetic tape 28 that is being traveled is changed from the DV format to the HD2 format at time t₇, the CPU 53 detects that the DV format was changed to the HD2 format. When the CPU 50 was informed of the detected result. Since the video camera apparatus 1 does not handle the after-recording operation for a digital video signal in the HD2 format, when the CPU 50 is informed that the DV format was changed to the HD2 format, the CPU 50 replaces the final mode with the stop mode and informs the CPU 53 that the final mode was replaced with the stop mode. Accordingly, the CPU 53 automatically stops the after-recording operation (at time t₈) and reproduces a digital video signal in the HD2 format. Instead, the video camera apparatus 1 may stop the reproducing operation. When the after-recording operation is automatically stopped, a message that represents that the after-recording operation was stopped appears on the display panel 34 according to a command issued by for example the CPU 50.

While the video camera apparatus 1 is reproducing a digital video signal in the HD2 format, when the user designates the after-recording operation (at time t₉), the video camera apparatus 1 is prohibited from issuing a final mode of the after-recording operation. Thus, the video camera apparatus 1 does not issue a final mode of the after-recording operation, but continues the reproduction mode. In this case, since the video camera apparatus 1 has not issued a final mode of the after-recording operation, even if the format of a digital video signal recorded on the magnetic tape 28 is changed from the HD2 format to the DV format, the video camera apparatus 1 does not automatically perform the after-recording operation.

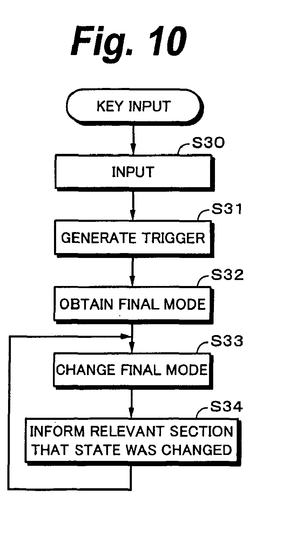

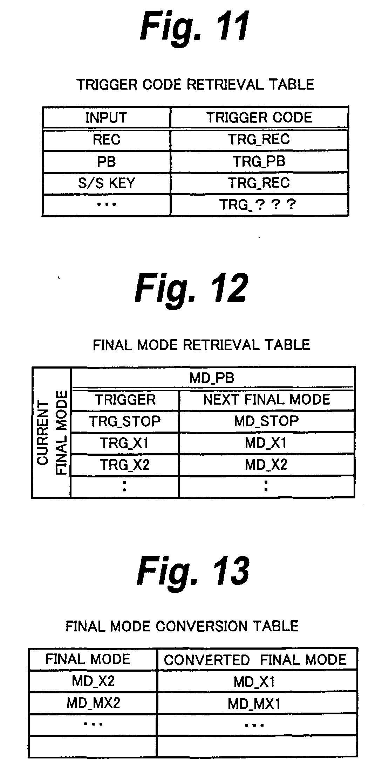

Fig. 10 is a flow chart of an example of mechanical mode changes according to the first embodiment of the present invention. When the user performs a key operation for the reproducing operation or the after-recording operation on the user interface 71, it generates a control signal according to the key operation and inputs the control signal to the CPU 50 (at step S30). The CPU 50 generates a trigger code according to the input control signal. Fig. 11 shows an example of a trigger code retrieval table that correlates input information and trigger codes. The trigger code retrieval table is pre-stored in for example the ROM 61. When the user performs a key operation and so forth, the CPU 50 references the trigger code retrieval table and retrieves a trigger code according to the input information of the key operation from the trigger code retrieval table.

Thereafter, the CPU 50 obtains a final mode according to the retrieved trigger code (at step S32). Fig. 12 shows an example of a final mode retrieval table that correlates trigger codes and final modes. Final mode retrieval tables are provided for individual final modes and pre-stored in for example the ROM 61. In other words, at step S31, a final mode retrieval table for a final mode according to the obtained trigger code. The next final mode according to the trigger code obtained at step S31 is retrieved as the last final code from the retrieved final mode retrieval table at step S32.

At the next step, step S33, the CPU 50 performs a final mode conversion process when the format determined result of the CPU 53 represents that the format of a digital video signal that is being reproduced from the magnetic tape 28 is the HD2 format. Fig. 13 shows an example of a final mode conversion table. The final mode conversion table correlates final modes of for example the DV format and final modes of the HD2 format whose operations and reproduction pictures are the closest to those of the final modes of the DV format. The final mode conversion table is pre-stored in for example the ROM 61.

When the format determined result is the DV format and the current final mode has been converted because the HD2 format has been detected, the final mode is restored to the original final mode for a digital video signal in the DV format at step S33.

When the final mode is converted at step S33, the flow advances to step S34. At step S34, the CPU 50 informs the CPU 53 that the state was changed.

The processes at step S33 and step S34 are repeatedly performed according to the format determination process described in Fig. 8. In other words, at step S33, the CPU 53 performs a process for one track of the flow chart shown in Fig. 8. When necessary, the CPU 53 informs the CPU 50 of the format determined result. The CPU 50 performs the final mode conversion process according to the format determination result and informs the CPU 53 of the result. Thereafter, the flow returns to step S33. At step S33, the CPU 53 performs the format determination process for the next track. Specifically, the processes from step S30 to step S32 are performed for each track according to user's operation.

Next, a second embodiment of the present invention will be described. When digital video signals having a plurality of formats are mixedly recorded on the magnetic tape 28, the mechanical modes are changed in the method according to the first embodiment of the present invention. In contrast, according to the second embodiment of the present invention, the user designates a mechanical mode. For example, the mechanical modes are forcibly changed for predetermined formats.

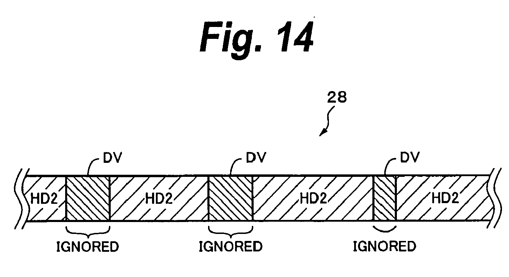

Next, with reference to Fig. 14, the second embodiment of the present invention will be described. For example, it is assumed that a digital video signal in the DV format has been recorded on the magnetic tape 28 and a digital video signal in the DV format is overwritten on the magnetic tape 28 as shown in Fig. 14. As shown in Fig. 14, areas of the digital video signal in the DV format may be dispersed in areas of the digital video signal in the HD2 format. When the formats of the digital video signals recorded on the magnetic tape 28 are automatically determined and these digital video signals are reproduced therefrom, as described above, areas that are not reproduced take place at points of which the HD2 format is changed to the DV format and vice versa.

Thus, according to the second embodiment of the present invention, the user pre-designates the HD2 format as a reproducing format through the user interface. The CPU 50 forcibly sets the HD2 format as a final mode according to the user's designation. As a result, as shown in Fig. 14, when digital video signals having both the HD format and the DV format are reproduced from the magnetic tape 28, only the digital video signal having the HD2 format is reproduced whereas the digital video signal having the DV format is ignored.

Thus, when the recording format of a digital video signal on the magnetic tape 28 is changed, the digital video signal is continuously reproduced without delays due to changes of formats. Thus, when a digital video signal having a single format is edited, the digital video signal can be prevented from being lost against delays due to changes of formats.

Next, a third embodiment of the present invention will be described. As described in Fig. 4, the video camera apparatus 1 according to the third embodiment of the present invention has a 1394 I/F 40, which allows data to be exchanged with an external device such as a computer device. In other words, a digital video signal transmitted from the computer device in a predetermined format can be received by the 1394 I/F 40 and recorded on a magnetic tape 28. In addition, a digital video signal reproduced from the magnetic tape 28 can be transmitted to an external computer device through the 1394 I/F 40. The computer device can temporarily record the received digital video signal in for example a hard disk and perform an edit operation for the digital video signal.

It is assumed that digital video signals having the HD2 format and the DV format data are reproduced from the magnetic tape 28 by automatically changing the formats according to format determination results and the reproduced digital video signals are output from the 1394 I/F 40. In this case, when the reception side that receives a digital video signal from the 1394 I/F 40 does not handle changes of formats of digital video signals that are received, the reception side may face a critical problem when the formats are changed.

Thus, according to the third embodiment of the present invention, when data are reproduced from the magnetic tape 28 and transmitted to the outside of the video camera apparatus 1 through the 1394 I/F 40, the format of the data can be designated. For example, an operation section that selects the format of data is disposed in the user interface so that one of the three modes that are the automatic determination mode (1), the HD2 format mode (2), and the DV format mode (3) can be selected.

In the automatic determination mode (1), when the video camera apparatus 1 reproduces a digital video signal from the magnetic tape 28, the video camera apparatus 1 changes the system state according to the determined result of the foregoing format automatic determination process. The video camera apparatus 1 performs a process according to the format of the digital video signal reproduced from the magnetic tape 28. The video camera apparatus 1 can receive a stream from the external computer device or the like through the 1394 I/F 40. The video camera apparatus 1 can record a digital video signal and a digital audio signal transmitted as a stream on the magnetic tape 28, display the digital video signal on the display panel 34 and the view finder 37, and output the digital video signal through the D4 terminal 31. In the automatic determination mode (1), the video camera apparatus 1 can determine the format of a stream received by the 1394 I/F 40 according to for example predetermined header information of the stream.

In the HD2 format mode (1), the video camera apparatus 1 forcibly sets the system state for the HD2 format. In this case, when the video camera apparatus 1 reproduces a digital video signal from the magnetic tape 28 and detects that the format of the digital video signal is the DV format, the video camera apparatus 1 does not output the digital video signal having the DV format to the output section. In other words, when the video camera apparatus 1 has set the system state for the HD2 format mode, even if the video camera apparatus 1 reproduces a digital video signal having the DV format, the video camera apparatus 1 does not display pictures according to the digital video signal having the DV format on the display panel 34 and the view finder 37. In addition, the video camera apparatus 1 does not output the digital video signal having the DV format to the D4 terminal 31. Furthermore, the video camera apparatus 1 does not transmit the digital video signal having the DV format through the 1394 I/F 40.

Like the HD2 format mode.(2), in the DV format mode (3), the video camera apparatus 1 forcibly sets the system state for the DV format. In this case, when the video camera apparatus 1 reproduces a digital video signal from the magnetic tape 28 and detects that the format of the digital video signal is the HD2 format, the video camera apparatus 1 does not output the digital video signal having the HD2 format to the output section. In other words, when the video camera apparatus 1 has forcibly set the system state for the DV format mode, even if the video camera apparatus 1 reproduces a digital video signal having the HD2 format, the video camera apparatus 1 does not display pictures according to the digital video signal having the HD2 format on the display panel 34 and the view finder 37. In addition, the video camera apparatus 1 does not output the digital video signal having the HD2 format to the D4 terminal 31. Furthermore, the video camera apparatus 1 does not transmit the digital video signal having the HD2 format through the 1394 I/F 40.

When for example a computer device is connected to the 1394 I/F 40, the HD2 format mode (2) or the DV format mode (3) of the modes (1) to (3) is designated. Thus, the video format of a stream transmitted from the 1394 I/F 40 is fixed regardless of the format of a digital video signal reproduced from the magnetic tape 28. Thus, a problem that may take place on the transmission destination side due to a change of a format of a stream can be prevented.

The operations of the modes (1) to (3) are controlled by the CPU 53 according to a command issued by the CPU 50.

When the video camera apparatus 1 has forcibly set the system mode for the HD2 format mode (2) or the DV format mode (3), if the video camera apparatus 1 reproduces a digital video signal having a format that is different from the designated format from the magnetic tape 28 or inputs this digital video signal from the 1394 I/F 40, it is preferred that a message that represents that a digital video signal having the different format is being reproduced or input be displayed on the display panel 34 and so forth. Instead, the message may be displayed on an external monitor device connected to the D4 terminal 31.

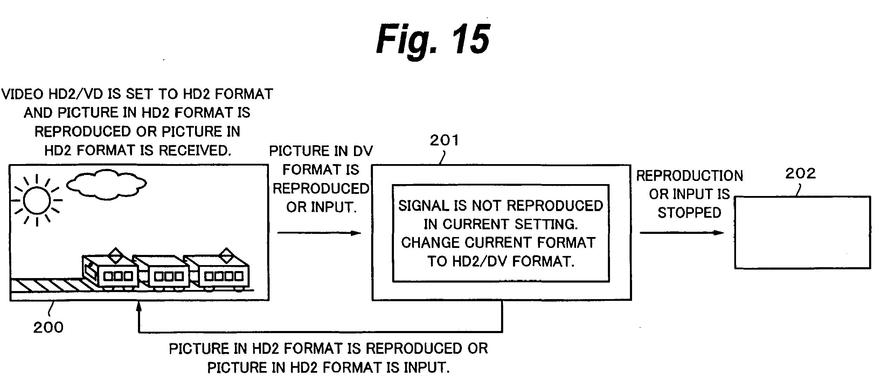

Fig. 15 shows an example of displays in the case that designated formats are different from formats of digital video signals that are reproduced or input. For example, when the video camera apparatus 1 that has set the system state for the HD2 format mode (2) reproduces a digital video signal having the HD2 format from the magnetic tape 28 or receives the digital video signal having in the HD2 format from the 1394 I/F 40, as shown in a display 200, the video camera apparatus 1 displays the digital video signal reproduced or received on for example the display panel 34.

When the format of the digital video signal reproduced from the magnetic tape 28 or received from the 1394 I/F 40 is changed from the HD2 format to the DV format, as shown in a display 201, the video camera apparatus 1 displays a message that represents that the current system state prohibits the picture of the digital video signal from being reproduced (displayed) instead of the reproduced or received picture shown in the display 200 on the display panel 34 and so forth. The video camera apparatus 1 displays the message shown in the display 201 with a video signal generated by the OSD section 41 according to a command issued by for example the CPU 50.

Thereafter, there will be two display methods. In the first method, the video camera apparatus 1 continuously displays the message shown in the display 201 on the display panel 34 and so forth until the format of the digital video signal reproduced from the magnetic tape 28 or received from the 1394 I/F 40 is restored to the format for which the system state has been set (in this example, the HD2 format). When the format of the digital video signal reproduced or received is restored to the format for which the system state has been set, the video camera apparatus 1 displays a picture according to the digital video signal on the display panel 34 and so forth.

In the second method, the video camera apparatus 1 displays the message shown in the display 201 on the display panel 34 and so forth for a predetermined time period, for example several seconds. Thereafter, as shown in a display 202, the video camera apparatus 1 stops reproducing a digital video signal from the magnetic tape 28 or stops receiving a digital video signal from the 1394 I/F 40.

Instead, the first method and the second method may be combined. In other words, in the first method, the video camera apparatus 1 may display the message on the display panel 34 and so forth for a predetermined time period until the format of the digital video signal reproduced or received in the first method is restored to the format for which the system state has been set. After the predetermined time period elapses, as shown in the display 202, the video camera apparatus 1 may stop reproducing the digital video signal or stop receiving the digital video signal.

Next, a modification of the third embodiment of the present invention will be described. According to this modification, a down-converter that down converts the HD2 format into the DV format is disposed in the 1394 I/F 40. A digital video signal and a digital audio signal that have the HD2 format are converted into a digital video signal and a digital audio signal that have the DV format and the converted signals are transmitted to the outside of the video camera apparatus 1.

The function of the down-converter can be turned on and off from the user interface. When the system state is the HD2 format and the down-converter is turned on, the video camera apparatus 1 converts a signal having the HD2 format supplied from the MUX/DEMUX 24 into a signal having the DV format and transmits the converted signal to the outside. When the system state is the HD2 format and the down-converter is turned off, the video camera apparatus 1 transmits the signal having the HD2 format supplied from the MUX/DEMUX 24 to the outside without conversion. When the system state is the DV format, the video camera apparatus 1 transmits a signal having the DV format regardless of whether the down-converter is turned on or off.

With the function of the down-converter, if the user has an editing environment for a digital video signal having the DV format, not a digital video signal having the HD2 format, he or she can edit a digital video signal captured and recorded by the video camera apparatus 1. At this point, since the format of the digital video signal that is output from the video camera apparatus 1 is forcibly set for the DV format, the user side does not have a problem of the computer device against changes of formats.

It should be understood by those skilled in the art that various modifications, combinations, subcombinations and alternations may occur depending on design requirements and other factors insofar as they are within the scope of the appended claims or the equivalents thereof.

## Claims

1. A reproducing apparatus that is capable of reproducing, from a recording medium, digital signals that have a plurality of different formats, the apparatus comprising:
format determination means for determining the format of a digital signal reproduced from the recording medium;
reproduction means for reproducing a digital signal from the recording medium in a predetermined state; and
state change management means for managing the change of the state of the reproduction means according to the determined result of the format determination means.

2. The reproducing apparatus as set forth in claim 1,
wherein when the format of the digital signal does not accord with a destination-state of the reproduction means, the state change management means replaces the destination-state of the reproduction means with another state according to the format of the digital signal to cause the reproduction means to operate in the changed state.

3. The reproducing apparatus as set forth in claim 1 or 2,
wherein the state of the reproduction means is changed when the format of the digital signal reproduced from the recording medium is changed.

4. The reproducing apparatus as set forth in claim 2,
wherein the destination-state is set according to user input.

5. The reproducing apparatus as set forth in claim 2, 3 or 4
wherein a picture reproduced in the changed state is visually similar to a picture reproduced in the original state.

6. The reproducing apparatus as set forth in any of claims 1 to 5,
wherein when the format of the digital signal does not accord with a destination-state of the reproduction means, the state change management means maintains the state of the reproduction means.

7. The reproducing apparatus as set forth in claim 6,
wherein after the state change management means maintains the state, when the format is changed to a format that corresponds to the destination-state of the reproduction means, the state change management means replaces the state with the destination-state.

8. The reproducing apparatus as set forth in any one of claims 2 to 7,
wherein the changed state is a state in which the change of the state is halted.

9. The reproducing apparatus as set forth in any one of claims 1 to 8,
wherein the state change management means has a first mode that forcibly changes the state according to a predetermined format and a second mode that changes the state according to a format determined by the format determination means.

10. A reproducing method of reproducing, from a recording medium, digital signals that have a plurality of different formats, the reproducing method comprising the steps of:
determining the format of a digital signal reproduced from the recording medium;
reproducing a digital signal from the recording medium in a predetermined state; and
managing the change of the state of the reproduction means according to the determined result of the format determination step.
